# EUROPEAN PATENT APPLICATION

(11) **EP 0 947 376 A1**
(43) Date of publication of application: **06.10.1999**
(21) Application number: 98302638.6
(22) Date of filing: 03.04.1998
(51) Int. Cl.: B60L 11/18, B60K 1/02, B62D 59/04

(54) **Composite electric vehicle system with removable power source**

(71) Applicant: Institute for Home Economics of Japan, Inc., Ashiya-shi, Hyogo 659-0025 (JP)
(72) Inventor: Kohchi, Akira, Ashiya-shi, Hyogo 659-0025 (JP)
(74) Representative: Whalley, Kevin

(57) **Abstract**

A composite electric vehicle system includes a first electric vehicle for carrying an operator, a first source of electrical power, a first electric motor and appropriate driver control units. A detachable auxiliary electric vehicle is removably connected to the first electric vehicle and also includes its own source of electrical power and second electrical means are provided for removably interconnecting the first electric vehicle and the auxiliary electric vehicle so that they are mechanically interconnected and electrically interconnected. A master controller is provided for activating the various electric motors so that when the driver control unit requests an activation of the first electric motor above a predetermined threshold value of torque output, the controller can activate the second electric motor to augment the torque output.

## Description

### BACKGROUND OF THE INVENTION

### 1. Field of the Invention

The present invention relates to an electrical vehicle system comprising a primary electric vehicle and a separable wheeled unit providing an additional source of electricity and mode of power that can be removable attached to the primary electric vehicle.

### 2. Description of Related Art

The conventional accumulator batteries and/or fuel cells that are used to supply driving power to an electric vehicle constitute in aggregate a considerable portion of the total vehicle weight and bulk. By increasing the number of accumulator batteries and/or fuel cells to extend the driving range of the vehicle, the transport capacity of the electric vehicle is accordingly reduced. Normally, in refueling exhausted batteries or fuel cells, it is necessary that the electric vehicle be rendered immobile for a period of time required to charge the source of electricity.

The performance of the electric vehicle can also be influenced by the size of the electrical motors wherein, generally, electrical motors with a larger output will improve acceleration of the vehicle. The selection, however, of the larger electric motor increases the weight and bulk of a vehicle since larger motors themselves increase in weight and bulk disproportionately, thereby negating some of the benefits of an increase in an output power. Thus, in designing and manufacturing zero-emission electric vehicles, factors such as the weight and bulk of the source of the electricity as well as the electrical motors, along with the refuel time and the driving range, are all directly interrelated. There have been proposals to reduce the refuel time of an electric vehicle by using an off-board battery swapping system as set forth in U.S. Patent No. 5,559,420.

There is still a desire, however, to optimize the performance of an electric vehicle and to simplify the manner in which an electric vehicle can be recharged to increase the driving range.

### OBJECTS AND SUMMARY OF THE INVENTION

It is an object of the present invention to provide an electric vehicle with an increased transportation capacity while being driven by relatively smaller electrical motors.

It is another object of the present invention to enable a quick refuel or recharge of an electric vehicle through an exchange of a separable source of electrical power that can ride on its own wheels.

It is a further object of the present invention to provide an electric vehicle which can have increased acceleration in starting, climbing or passing in spite of the use of smaller motors and the resulting weight of a separable source of electricity that is towed by the electric vehicle.

These objects and others are addressed by the present invention which provides a novel composite electric vehicle system which includes a primary electric vehicle that is fully operable *per se* and a detachable power source and auxiliary motor which can be located extraneous to the primary electric vehicle and towed behind it. The detachable power source includes a plurality of batteries or fuel cells and it is mounted on wheels to permit transportation in conjunction with the electric vehicle. The power source can include electric motors which can drive the wheels and appropriate circuitry and electronic controllers can control the supply of electricity to the electrical motors and also electricity to the electric vehicle. Various mechanical and electrical connectors can attach the power source to the electric vehicle. A manual-automatic control system can be used for changing the motion of the entire composite structure of the electric vehicle and the transportable power source.

The composite electric vehicle system includes a first primary electric vehicle capable of carrying the operator and passengers, which is similar to a conventional electric vehicle, with wheels driven by an electrical motor or power source that is attached to a source of electric power. A driver control unit can activate a first electric motor and the driver can operate it with steering wheel, brakes, accelerator, etc. A detachable and towable auxiliary electric vehicle is configured to support a second source of electric power and to provide a second auxiliary electrical motor that is capable of driving the auxiliary electric vehicle. A computer system is provided in the primary electric vehicle for controlling the application of power in the primary electric vehicle system. Another computer system is also provided in the detachable power source vehicle. A controller can be mounted in the primary electric vehicle for respectively controlling each of the computer systems. The controller can actually be a host computer system for also controlling the primary electric vehicle system with the computer system in the detachable power source being a slave computer. The controller can activate the auxiliary electrical motor when the driver control unit requests an activation of the primary electric motor above a predetermined threshold value of output torque. The controller can monitor, with a torque sensor, the output of the primary electrical motor and can respond to the accelerator command of the operator so that when a predetermined threshold of torque output is exceeded, the controller can activate the auxiliary electrical motor to provide the additional power. Additionally, the controller can first utilize the power in the detachable power source to thereby conserve the power in the primary electric vehicle. Thus, the primary electric vehicle can simply change detachable power sources without waiting for a recharge time period. The detachable power source can be detachably mounted behind the primary electric vehicle and electrical connectors can be easily released and connected between the primary electric vehicle and the detachable power source.

### BRIEF DESCRIPTION OF THE DRAWINGS

Figure 1 is a schematic illustration of the composite electric vehicle system comprising a primary electric vehicle for supporting the driver and a self-propelling electricity supply unit on wheels in accordance with the present invention;
Figure 2 illustrates a top schematic view of a manual-automatic control shift with a shift bar for controlling vehicular motion; and
Figure 3 is a schematic flowchart illustrating a program for effectuating the combined driving of the primary electric vehicle and the self-propelling electricity supply unit.

### DETAILED DESCRIPTION OF THE PREFERRED EMBODIMENTS

The following description is provided to enable any person skilled in the art to make and use the invention and sets forth the best modes contemplated by the inventor of carrying out his invention. Various modifications, however, will remain readily apparent to those skilled in the art, since the general principles of the present invention have been defined herein specifically to provide a composite electric vehicle system with a primary electric vehicle and a detachable electrical power source that can augment the torque output of the primary electric vehicle.

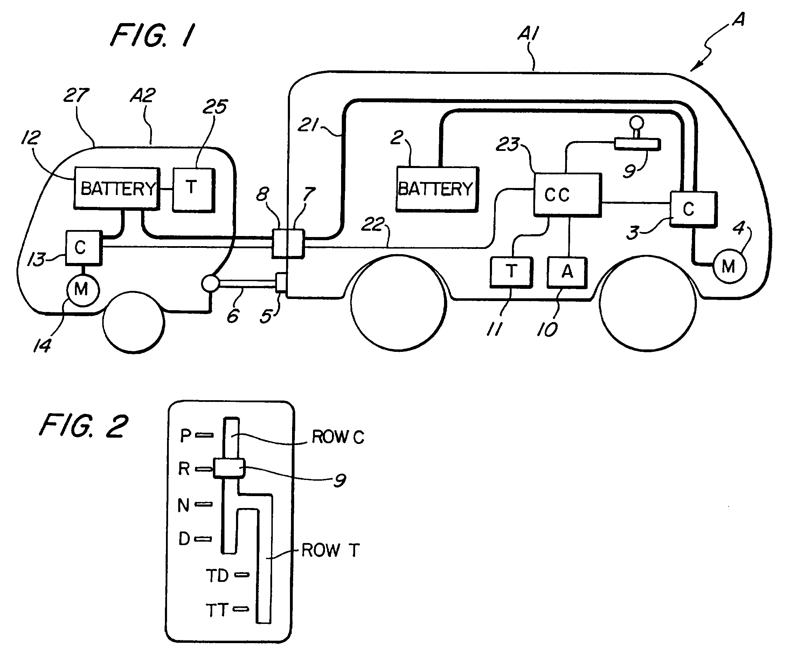

Referring to Figure 1, the composite electric vehicle system A includes an electric vehicle A1 that can be similar to a conventional configuration in providing a power source and electric motor, and a self-propelling electricity supply unit on wheels A2. The electric vehicle A1 is modified from the conventional electric vehicle with a novel power and control system to accommodate the advantageous features of the present invention of benefiting from a self-propelled electricity supply unit A2.

The primary electric vehicle A1 is powered by on-board batteries or fuel cells 2 and is driven by one or more electric motors 4 through a controller 3, such as a microprocessor-based control system that can coordinate the application of power to the motor in response to an acceleration request from the driver. The electric vehicle A1 is only shown in a schematic form, but it is understood in the art that it has comparable features to that of a gas-driven car for a driver and passengers. Detachably connected to the first or primary electric vehicle A1 is a detachable auxiliary electric vehicle or cart A2 that can be powered by a larger number of batteries or fuel cells 12, then mounted on board the electric vehicle A1. Additionally, one or more electric motors 14 can drive the supply unit A2. A microprocessor-based controller 13 can coordinate the application of power from the batteries 12 to the electric motors 14.

The primary electric vehicle A1 and the auxiliary electricity supply unit A2 are mechanically attached at a connecting point 5 on the primary vehicle A1, while a matching connecting rod 6 is connected to the supply unit A2. This mechanical interconnection could be created by a standard ball and hitch or turntable and clamp arrangement. See, for example, the hitch adapter of U.S. Patent No. 4,664,403. Depending upon the design requirements of providing a driving force from the motors 14 to assist and augment the power of motor 4, the particular mechanical interconnection can accordingly be adjusted. For example, the motor 14 could have a level of power applied that would basically render the weight of the detachable electricity supply unit A2 as negligible upon the operating characteristics of the motor 4. Likewise, the motor 14 could, with an appropriate power transferring mechanical connection that accommodates the steering capability of the driver, provide a pushing force to the primary vehicle A1 to thereby augment the torque output of the motor 4.

It is highly desirable that the primary vehicle A1 and the unit A2 be easily separable from each other and, accordingly, an electrical connection of the connector 7 on the primary vehicle A1 side and a matching electrical connector 8 on the electricity supply unit A2 side should be designed to be easily detachable from each other. Connectors 7 and 8 can contain multiple slots and matching prongs to permit the connecting of the cables and wires on both sides, including both power lines 21 and control lines 22. Various conventional electrical connectors could be utilized.

Figure 2 discloses a schematic top plan view of a control shift bar 9 which would be provided within the easy reach of the driver of the primary electric vehicle A1. When the shift bar 9 remains in the row C, the composite electric vehicle system is controlled in a conventional manner, for example, "P" standing for parking, "R" for reverse motion, "D" for drive and "N" for neutral.

When the shift bar 9 is placed in the row T, a torque sensor 11, as well as control circuits between the master controller 23 and the microprocessor control system 13, can be activated. It should be appreciated that the master controller 23 could be integrated to perform the same function as the controller 3 in providing a computerized coordination and control of the primary electric vehicle A1.

Referring to Figure 2, the shift bar position TD indicates a driving mode of operation that is subject to a torque sensor augmentation of power. The traction motors 14 on the electricity supply unit A2 can be activated under this mode of operation to supply an additional propulsion force when called upon, such as in cases of starting, climbing or passing. The shift bar position TT indicates a driving mode of operation wherein the torque sensor application is applied in monitoring and powering only the auxiliary motor 14.

The performance characteristics of an electric vehicle generally depend on the output of its traction motors. In designing such traction motors, it is sometimes necessary to design a larger motor in order to provide a performance that will meet the most extreme applications of power. Such a larger electrical motor, however, is generally not needed in most applications of driving and additionally call for a heavier associated drive train and, by necessity, create both an increase in their volume and weight. Thus, the conventional power design for an electric vehicle requires that the designer must cater to the desire of the driver who may want a momentary surge in driving power at the resultant cost of a relatively large loss in energy being incurred during a normal driving or cruising mode of operation. The latter operation constitutes by far the majority of vehicle motion time.

The present invention addresses these problems, while further accommodating the design requirements of an extended range for an electric vehicle.

Referring again to Figures 1 and 2, the composite electric vehicle A of this invention can be driven with the shift bar 9 positioned at TD. In this mode of operation the master controller 23 can analyze inputs from the torque sensor 11, as well as from the acceleration pedal sensor 10, which can constitute a driver control unit. When the vehicle is initially started, the driver would step on the acceleration pedal and the sensor 10 would monitor the request for an activation of the electric motors. The torque sensor 11 can indicate whether an additional driving power is required to overcome the stationary inertia and the desired performance required from the driver. The master controller 23 then can activate the driving of the motor 14 with a command signal to the microprocessor 13. Thus, the motor 14 can augment the driving of the primary electric motor 4.

During the surge in driving power, electricity from the energy source 12 is supplied directly to both motors 14 and 4. After the composite electric vehicle system has attained a cruising speed, the temporary need for extra torque ceases and the controller 23 can cut off the motor 14. Power reinforcement by the motor 14, however, remains immediately available, such as in the case of passing or climbing. As long as the motor 4 alone can handle the power requirements of the composite electric vehicle system A1, A2, the master controller 23 will have the battery source 12 in the auxiliary electric vehicle system A2 supply electricity to the primary or first electrical motor 4.

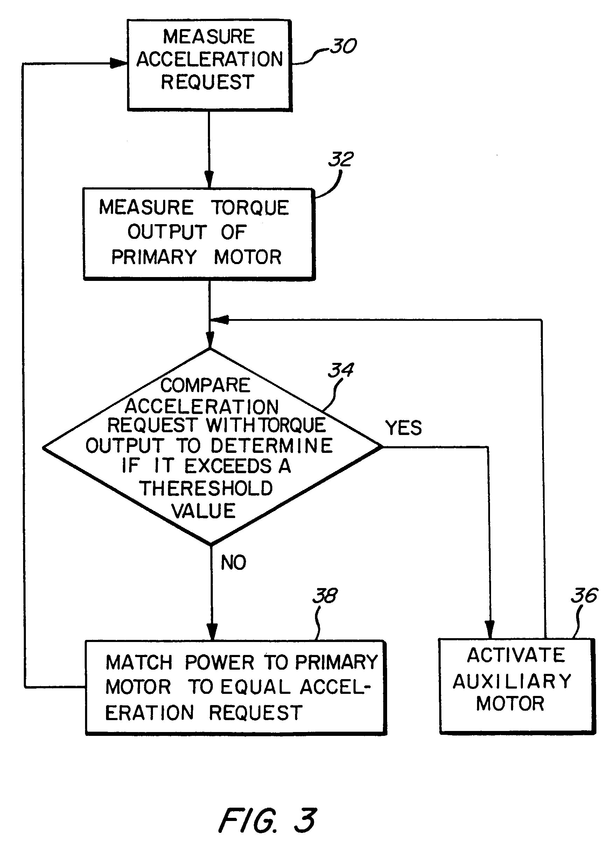

Referring to Figure 3, a schematic flowchart of a control program that can be utilized by the master controller 23, is disclosed. In step 30, the acceleration pedal sensor 10 can measure the acceleration request of the driver. This acceleration request causes the master controller 23 to apply power to the motor 4. The torque output by the motor 4 is measured in step 32. In step 34, a comparison can be made between the acceleration request with the torque output to determine if the request exceeds a predetermined threshold value. If the answer is yes, the master controller 23 can activate the second or auxiliary motor 14 in step 36. The system then responds back to continually monitor whether the requested torque output drops below the threshold value. If the torque output does not exceed the threshold value of the acceleration request, then the master controller 23 will match the power requirements from the auxiliary batteries 12 to the primary motor 4 to thereby equal the desired acceleration request of the composite electric vehicle system.

As can be appreciated, variations in this flowchart can be implemented in the actual programming, for example, table of values of acceleration request and torque outputs for various levels of power can be utilized in addition to the actual torque sensor 11 to refine and tailor the application of power in the most efficient application.

When the shift bar 9 is placed at the TT position, only the electric motor 14 in the detachable auxiliary electric vehicle A2 is driven, and the motor 4 can be deactivated. This TT arrangement permits an independent pushing propulsion force to be applied to the primary electric vehicle A1 under unusual circumstance, for example, if the primary electric vehicle A1 motor fails.

As also can be appreciated, various microprocessor systems 3 and 13 and the master controller systems can also be constructed to include the functions of charging, regenerating and braking as is known in the art.

The manual-automatic control for changing the vehicle motion is constructed in such a manner that when the shift bar 9 is positioned in row C, only the on-board source 2 supplies electricity. Thus, if the shift bar is positioned at D or for driving, for instance, the electric vehicle A1 is moved, with or without the unit A2 attached to it. However, when the shift bar 9 is positioned in the row T, only the auxiliary power source 12 is relied upon to supply electricity to the composite electric vehicle system.

Since the total torque requirements of the composite electric vehicle system is provided in aggregate by a set of electrical motors which are distributed in location between the primary electric vehicle A1 and the detachable auxiliary electric vehicle A2, each of the individual traction motors can be made smaller than would otherwise be required.

Most drivers would prefer driving with the shift bar 9 placed at a TD position, inasmuch as this makes it possible to automatically obtain a surge in driving power when needed. Additionally, this TD position will draw electricity only from the auxiliary power source 12 which becomes the main power source for the composite electric vehicle system. As a consequence, this principal battery source 12 is likely to be spent first, rather than the on-board battery source 2. A spent source on the separable unit A2 can be easily exchanged with a fresh one by replacing the detachable Unit A2 with another one at a filling station. The exchange or refueling operation can be performed in a matter of a few minutes. The spent attachable unit A2 can then be recharged in a conventional manner so that fresh detachable auxiliary electric vehicles can be positioned at convenient road-side charging stations. As a result, a composite electric vehicle system of the present invention can be driven almost continuously, with only interruptions provided for swapping detachable auxiliary electric vehicles A2 to the primary electric vehicle A1.

Additional features that exist in the present invention are that the main battery sources 12, schematically shown in Figure 1, can be contained in a temperature-controlled box that can be monitored by a temperature-controlled sensor 25 to prevent overheating. The individual batteries can be spaced from one another to provide appropriate air cooling features. Additionally, the housing or cowling of the detachable auxiliary electric vehicle 27 can be designed to reduce air drag.

Those skilled in the art will appreciate that various adaptations and modifications of the just-described preferred embodiment can be configured without departing from the scope and spirit of the invention. Therefore, it is to be understood that, within the scope of the appended claims, the invention may be practiced other than as specifically described herein.

## Claims

1. A composite electric vehicle comprising:
a primary electric vehicle having directional and general operational controls;
a torque sensor provided on said vehicle for detecting a need for additional driving power;
a source of electricity unit on wheels for supplying electricity, said source having a plurality of accumulator batteries or a fuel cell;
one or more electric traction motors provided on said unit for driving said wheels;
electronic controller means for receiving and responding to input signals and outputting control signals;
terminals and circuit wires and power cables interconnecting related parts;
electrical means for connecting said vehicle and said unit electrically;
mechanical means for separably attaching said vehicle and said unit together; and
a manual-automatic control means provided on said vehicle for changing motion of said vehicle or said unit or said vehicle and said unit attached together.

2. The composite electric vehicle as defined in Claim 1 wherein said batteries are contained in a temperature controlled box.

3. The composite electric vehicle as defined in Claim 1 wherein said batteries are spaced one from another for air-cooling.

4. The composite electric vehicle as defined in Claim 1 wherein said electronic controller means compare the values of signals incoming from an acceleration pedal sensor on one hand and from said torque sensor on the other and, when the comparison ratio exceeds a threshold, initiate an outgoing signal for setting up a circuit between said batteries or fuel cells and said traction motors.

5. The composite electric vehicle as defined in Claim 4 wherein said electrical means for connection are comprised of multi-slots and matching throngs for connecting cables and wires on said vehicle side on one hand and cables and wires on said unit side on the other.

6. The composite electric vehicle as defined in Claim 5 wherein said mechanical means for separably attaching said vehicle and said unit together are constructed by a ball and hitch arrangement.

7. The composite electric vehicle as defined in Claim 5 wherein said mechanical means for separably attaching said vehicle and said unit together are constructed by a turntable and clamp arrangement.

8. The composite electric vehicle as defined in Claim 5 wherein said manual-automatic control means include a shift bar for enabling the driver to select a mode of vehicular motion.

9. The composite electric vehicle as defined in Claim 8 wherein said shifi bar is made to shift in either one of two distinctive grooves at a time, one groove having motion modes of parking, reverse, neutral, drive and the other groove having motion modes of natural, torque-sensored drive, tail thrust, where said two grooves are connected at neutrals and when said bar is shifted into the latter groove, cable circuits transmitting power from said source of electricity unit on wheels to said traction motors as well as to traction motors of said primary electric vehicle having directional and general operational controls are made to close.

10. The composite electric vehicle as defined in Claim 5 wherein said source of electricity on wheels is cowled for reducing air drag while in motion.

11. A composite electric vehicle system comprising:
a first electric vehicle with wheels for carrying an operator including a first source of electrical power, a first electric motor for driving the first electric vehicle and a driver control unit for activating the first electric motor;
a detachable auxiliary electric vehicle with wheels removably connected to the first electric vehicle including a second source of electrical power, and a second electric motor for driving the composite electric vehicle system;
means for removably interconnecting, mechanically and electrically, the first electric vehicle and the auxiliary electric vehicle; and
a controller for activating the second electric motor when the driver control unit requests an activation of the first electric motor above a predetermined threshold value of output, the controller is operatively connected to the first source of electrical power, the first electric motor, the driver control unit, the second source of electrical power and the second electric motor.

12. The composite electric vehicle replica of Claim 11 further including a torque sensor for monitoring a torque output of the first electric motor.

13. The composite electric vehicle system of Claim 11 wherein a first computer system is provided in the first electric vehicle for controlling the first source of electrical power and first electric motor and a second computer system is provided in the auxiliary electric vehicle for controlling the second source of electrical power and the second electric motor, the controller coordinates the operation of the first and second computer systems and is mounted in the first electric vehicle.

14. The composite electric vehicle system of Claim 11 wherein the driver control unit includes a first control member for solely controlling the first electric vehicle and a second control member for controlling both the first electric vehicle and the auxiliary electric vehicle.
